# EUROPEAN PATENT APPLICATION

(11) **EP 3 508 956 A1**
(43) Date of publication of application: **10.07.2019**
(21) Application number: 17783382.9
(22) Date of filing: 15.06.2017
(51) Int. Cl.: G06F 3/0338, G05G 9/047

(54) **REMOTE CONTROL AND JOYSTICK DEVICE THEREOF**

(30) Priority: 31.08.2016 CN 201621029962 U
(71) Applicant: Autel Robotics Co., Ltd., Shenzhen, Guangdong 518055 (CN)
(72) Inventor: WU, Xingwen, Shenzhen Guangdong 518055 (CN)
(74) Representative: Gulde & Partner
(86) International application number: PCT/CN2017/088484
(87) International publication number: WO 2018/040672

(57) **Abstract**

The present invention provides a remote control and a rocker device thereof. In the rocker device, a torsional spring is sleeved on each of a first rotating device and a second rotating device. It is set that a line on which the first rotating device is located is an X axis, and a line on which the second rotating device is located is a Y axis. When a handle is operated along a left-right direction of the X axis, the handle drives the second rotating device to move, and two legs of the torsional spring on the second rotating device are limited by a limiting block on a base to generate reverse torsion. When the handle is released, the second rotating device resets under the action of the reverse torsion of the torsional spring, to bring the handle to the neutral position. A similar process is used for an operation along the Y axis. When the handle is operated along a direction other than a direction along the X axis and the Y axis, the handle drives the first rotating device and the second rotating device to move at the same time. The second rotating device and the first rotating device respectively reset, to bring the handle to the neutral position at the same time.

## Description

### BACKGROUND

### Technical Field

The present invention relates to a power tool whose operation is controllable, and in particular, to a remote control and a rocker device thereof.

### Related Art

In existing rocker devices, the reset mechanisms of the X axis and the Y axis implement a moving function by means of related mechanical structures such as a tension spring, a metal spring plate, and a mechanical part. Consequently, the reset mechanism has a relatively complex structure. A reset process thereof is unsmooth and a sticking phenomenon occurs, resulting in inflexible operations.

### SUMMARY

In view of technical problems in the prior art that a reset mechanism of a rocker device has a relatively complex structure and a reset process thereof is unsmooth and a sticking phenomenon occurs, resulting in inflexible operations, the present invention provides a remote control and a rocker device thereof. The technical solutions are as follows:
Embodiments of the present invention provide a rocker device, including:
a base, which includes a bottom board, a side wall extending upward from the bottom board, a limiting block being disposed on the base and the side wall being provided with a first group of positioning holes and a second group of positioning holes;
a first rotating device, two ends of the first rotating device being embedded into the first group of positioning holes, the first rotating device being rotatably connected to the base and the first rotating device being provided with a first opening;
a second rotating device, two ends of the second rotating device being embedded into the second group of positioning holes, the second rotating device being rotatably connected to the base, the second rotating device being provided with a second opening and the second opening overlapping with the first opening;
torsional springs, which each include a spring pipe and two legs extending from the spring pipe, the two legs abutting against the limiting block, there being at least two torsional springs and the two spring pipes being respectively sleeved on the first rotating device and the second rotating device; and
a handle, which is fixed to the first rotating device and disposed in the first opening, the handle passing through the first opening and the second opening and the handle being fixed to the first rotating device.

The first rotating device includes:
a first support, which is hollow, the first opening being provided on the first support and being an elliptic opening, a first latching portion being disposed at the bottom of the first support on an inner side, and the first latching portion being located above the limiting block;
two first rotating shafts respectively fixed to two sides of the first support, the first rotating shaft being disposed above the first latching portion; and
a first bearing sleeved on the first rotating shaft, the first bearing being embedded into the positioning hole; or
a first bearing collar sleeved on the first rotating shaft, the first bearing collar being embedded into the positioning hole.

The second rotating device includes:
a second support, which is sleeved above the first support and is inverted-U-shaped, the second opening being provided on the top of the second support and being an arcuate opening, two second latching portions being disposed at the bottom of the second support on two sides, and the second latching portion being located above the limiting block;
two second rotating shafts respectively fixed to the two sides of the second support, the second rotating shaft being disposed above the second latching portion and a line on which the second rotating shaft is located being perpendicular to a line on which the first rotating shaft is located; and
a second bearing sleeved on the second rotating shaft, the second bearing being embedded into the positioning hole; or
a second bearing collar sleeved on the second rotating shaft, the second bearing collar being embedded into the positioning hole.

The torsional springs include:
a first torsional spring, which has a first spring pipe and two first legs extending from the first spring pipe, the first spring pipe being sleeved on the first rotating shaft, upper parts of the two first legs abutting against the first latching portion, lower parts of the two first legs abutting against the limiting block, there being at least two first torsional springs and the two first torsional springs being respectively sleeved on two first bearings on the two sides; and
a second torsional springs, which has a second spring pipe and two second legs extending from the second spring pipe, the second spring pipe being sleeved on the second rotating shaft, upper parts of the two second legs abutting against the second latching portion, lower parts of the two second legs abutting against the limiting block, there being at least two second torsional springs and the two second torsional springs being respectively sleeved on two second bearings on the two sides.

The bottom board is provided with a first through hole and the bottom of the handle passes through the first through hole.

Four limiting blocks are evenly disposed on a periphery of the first through hole or four limiting blocks are evenly disposed on an inner side of the side wall.

The handle is provided with a third through hole, the first support is provided with a limiting hole and the rocker device further includes:
a fixing pin, which passes through the third through hole and the limiting hole and fixes the handle and the first rotating device.

The rocker device further includes an upper cover fixed to the base, the upper cover including a cover board and a cover side wall extending downward from the cover board, the cover board being provided with a second through hole and the handle extending out of the second through hole; and a first clamping portion is disposed on the side wall and a second clamping portion is disposed on the cover side wall, the first group of positioning holes and the second group of positioning holes being all formed by means of cooperation between the second clamping portion and the first clamping portion.

The rocker device further includes:
a magnet, which is fixed to the bottom of the handle.

The embodiments of the present invention further provide a remote control, including the rocker device described above.

The remote control further includes:
a lower cover, the base being fixed to the lower cover;
a circuit board, which is fixed to the lower cover and close to the bottom of the base; and
a magnetic induction unit for sensing the magnet, the magnetic induction unit being fixed to the circuit board.

The embodiments of the present invention have the following beneficial effects. In the rocker device provided in the embodiments of the present, the torsional spring is sleeved on each of the first rotating device and the second rotating device of the rocker device provided in the embodiments of the present invention. It is set that a line on which the first rotating device is located is an X axis, and a line on which the second rotating device is located is a Y axis. When the handle is operated along a left-right direction of the X axis, the handle drives the second rotating device to move, and the two legs of the torsional spring on the second rotating device are limited by the limiting block on the base to generate reverse torsion. When the handle is released, the second rotating device resets under the action of the reverse torsion of the torsional spring, to bring the handle to the neutral position. Likewise, when the handle is operated along a left-right direction of the Y axis, the handle drives the first rotating device to move, and the two legs of the torsional spring on the first rotating device are limited by the limiting block on the base to generate reverse torsion. When the handle is released, the first rotating device resets under the action of the reverse torsion of the torsional spring, to bring the handle to the neutral position . When the handle is operated along a direction other than a direction along the X axis and the Y axis, the handle drives the first rotating device and the second rotating device to move at the same time and the second rotating device and the first rotating device respectively reset, to bring the handle to the neutral position at the same time.

### BRIEF DESCRIPTION OF THE DRAWINGS

FIG. 1 is a three-dimensional diagram of a rocker device according to an embodiment of the present invention;
FIG. 2 is a three-dimensional diagram of a rocker device according to another embodiment of the present invention;
FIG. 3 is an exploded view of a first rotating device of a rocker device according to an embodiment of the present invention;
FIG. 4 is an exploded view of a second rotating device of a rocker device according to an embodiment of the present invention;
FIG. 5 is an exploded view of a base of a rocker device according to an embodiment of the present invention;
FIG. 6 is a three-dimensional diagram of a remote control according to an embodiment of the present invention;
FIG. 7 is an exploded view of a remote control according to an embodiment of the present invention;
FIG. 8 is a schematic diagram a of a moving direction of a handle according to an embodiment of the present invention;
FIG. 9 is a section view a of FIG. 8 along X-X;
FIG. 10 is a section view b of FIG. 8 along X-X;
FIG. 11 is a section view c of FIG. 8 along X-X;
FIG. 12 is a section view a of FIG. 8 along Y-Y;
FIG. 13 is a section view b of FIG. 8 along Y-Y;
FIG. 14 is a section view c of FIG. 8 along Y-Y;
FIG. 15 is a schematic diagram b of a moving direction of a handle according to an embodiment of the present invention; and
FIG. 16 is a side view of a remote control according to an embodiment of the present invention.

### Reference numerals:

100: Rocker device; 10: Base; 11: Bottom board; 111: First through hole; 12: Side wall; 121: First clamping portion; 13: Limiting block; 14: First group of positioning holes; 15: Second group of positioning holes; 20: First rotating device; 21: First opening; 22: First support; 221: Limiting hole; 222: First latching portion; 23: First rotating shaft; 24: First bearing; 25: First bearing collar; 30: Second rotating device; 31: Second opening; 32: Second support; 322: Second latching portion; 33: The Second rotating shaft; 34: Second bearing; 35: Second bearing collar; 40: Torsional spring; 41: Spring pipe; 42: Leg; 43: First torsional spring; 431: First spring pipe; 432: First leg; 44: Second torsional spring; 441: Second spring pipe; 442: Second leg; 50: Handle; 51: Third through hole; 60: Fixing pin; 70: Upper cover; 71: Cover board; 711: Second through hole; 72: Cover side wall; 721: Second clamping portion; 80: Magnet; 200: Lower cover; 300: Circuit board; 310: Magnetic induction unit.

### DETAILED DESCRIPTION

To make the objectives, technical solutions, and advantages of the present invention clearer and more comprehensible, the following further describes the present invention in detail with reference to the accompanying drawings and embodiments. It should be understood that the specific embodiments described herein are merely used to explain present invention but are not intended to limit present invention.

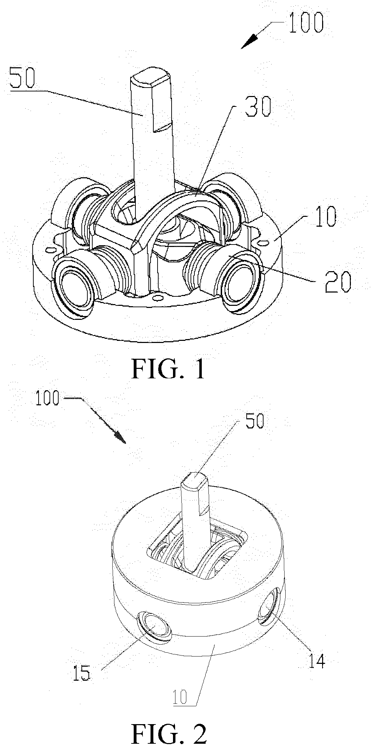

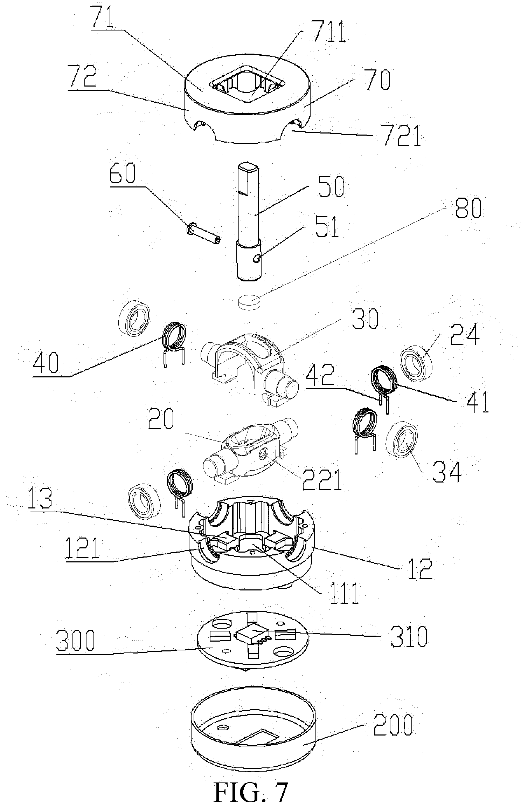

As shown in FIG. 1 to FIG. 5, a rocker device 100 provided according to an embodiment of the present invention includes a base 10, a first rotating device 20, a second rotating device 30, and torsional springs 40 and a handle 50 that are shown in FIG. 7. The base 10 includes a bottom board 11. A side wall 12 extends upward from the bottom board 11. A limiting block 13 is disposed on the base 10. The side wall 12 is provided with a first group of positioning holes 14 and a second group of positioning holes 15. Optionally, the limiting block 13 may also be disposed on the side wall 12. Two ends of the first rotating device 20 are embedded into the first group of positioning holes 14. The first rotating device 20 is rotatably connected to the base 10. The first rotating device 20 is provided with a first opening 21. Two ends of the second rotating device 30 are embedded into the second group of positioning holes 15. The second rotating device 30 is rotatably connected to the base 10. The second rotating device 30 is provided with a second opening 31 and the second opening 31 overlaps with the first opening 21. The torsional springs 40 shown in FIG. 7 each include a spring pipe 41 and two legs 42 extending from the spring pipe 41. The two legs 42 abut against the limiting block 13. Specifically, the legs 42 may abut against the limiting block 13 in a clasping or clamping manner. There are at least two torsional springs 40 and the two spring pipes 41 are respectively sleeved on the first rotating device 20 and the second rotating device 30. The handle 50 is disposed in the first opening 21 and passes through the first opening 21 and the second opening 31. The handle 50 is fixed to the first rotating device 20. The metal wire of the torsional spring 40 has certain hardness so as to repeatedly bear torsion. The two legs 42 have some elastic resilience. The open angle of the two legs 42 determines the extent of how the torsional spring 40 can twist.

In the rocker device 100 provided in this embodiment of the present invention, the torsional spring 40 is sleeved on each of the first rotating device 20 and the second rotating device 30. It is set that a line on which the first rotating device 20 is located is an X axis, and a line on which the second rotating device 30 is located is a Y axis. When the handle 50 is operated along a left-right direction of the X axis, the handle 50 drives the second rotating device 30 to move. Two legs 42 of the torsional spring 40 on the second rotating device 30 are limited by the limiting block 13 on the base 10 to generate reverse torsion F. When the handle 50 is released, the second rotating device 30 resets under the action of the reverse torsion F of the torsional spring 40, to bring the handle 50 to the neutral position. Likewise, when the handle 50 is operated along a left-right direction of the Y axis, the handle 50 drives the first rotating device 20 to move. The two legs 42 of the torsional spring 40 on the first rotating device 20 are limited by the limiting block 13 on the base 10 to generate reverse torsion F. When the handle 50 is released, the first rotating device 20 resets under the action of the reverse torsion of the torsional spring 40, to bring the handle 50 to the neutral position. When the handle 50 is operated along a direction other than a direction along the X axis and the Y axis, the handle 50 drives the first rotating device 20 and the second rotating device 30 to move at the same time. The second rotating device 30 and the first rotating device 20 respectively reset, to bring the handle 50 to the neutral position at the same time.

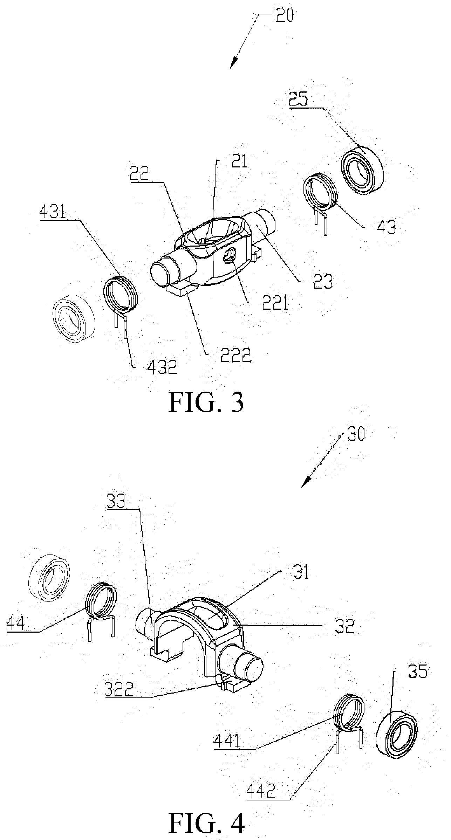

As shown in FIG. 3, in another embodiment of the present invention, the first rotating device 20 includes a first support 22, first rotating shafts 23 and a first bearing 24. The first bearing 24 may also be replaced by a first bearing collar 25. The first support 22 is hollow. The first opening 21 is provided on the first support 22. The first opening 21 is an elliptic opening. The first opening 21 is configured as elliptic, so that when the handle 50 shown in FIG. 1 rotates along the first opening 21, the process is smooth without any blind corner and stickiness. A first latching portion 222 is disposed at the bottom of the first support 22 on an inner side and the first latching portion 222 is located above the limiting block 13. The two first rotating shafts 23 are respectively fixed to two sides of the first support 22. The first rotating shaft 23 is disposed above the first latching portion 222. The first bearing 24 is sleeved on the first rotating shaft 23 and embedded into the positioning hole. Alternatively, the first bearing collar 25 is sleeved on the first rotating shaft 23 and embedded into the positioning hole. The first bearing 24 and the first bearing collar 25 both are used for supporting rotation of the first rotating shaft 23, reducing a friction coefficient in a moving process of the first rotating shaft 23, and ensuring rotary accuracy thereof. The first support 22 and the first rotating shaft 23 of the foregoing first rotating device 20 may be integrally formed. Therefore, a mechanical part is simple, a production process is easy to control, and costs are relatively low. Specifically, the first bearing collar 25 may be a rubber ring.

As shown in FIG. 4, in another embodiment of the present invention, the second rotating device 30 includes: a second support 32, second rotating shafts 33 and a second bearing 34. The second bearing 34 may also be replaced by a second bearing collar 35. The second support 32 is sleeved above the first support 22. The second support 32 is inverted-U-shaped. The second opening 31 is provided on the top of the second support 32 and is an arcuate opening. The second opening 31 is configured as an arcuate opening, so that when the handle 50 rotates along the second opening 31, the process is smooth without any blind corner and stickiness. Two second latching portions 322 are disposed at the bottom of the inverted-U shape on two sides and the second latching portion 322 is located above the limiting block 13. The two second rotating shafts 33 are respectively fixed to the two sides of the second support 32. The second rotating shaft 33 are disposed above the second latching portion 322 and a line on which the second rotating shaft 33 is located is perpendicular to a line on which the first rotating shaft 23 is located, so that reverse torsion F generated by the torsional spring 40 is relatively even in each direction. Certainly, in other implementations, an angle between the first rotating shaft 23 and the second rotating shaft 33 may be any other nonzero value other than 90°. That is, the first rotating shaft 23 intersects with the second rotating shaft 33. The second bearing 34 is sleeved on the second rotating shaft 33 and embedded into the positioning hole. Alternatively, the second bearing collar 35 is sleeved on the second rotating shaft 33 and embedded into the positioning hole. The second bearing 34 and the second bearing collar 35 both used for supporting rotation of the second rotating shaft 33, reducing a friction coefficient in a moving process of the second rotating shaft 23, and ensuring rotary accuracy thereof. The second support 32 and the second rotating shaft 33 of the foregoing second rotating device 30 may be integrally formed. Therefore, a mechanical part is simple, a production process is easy to control, and costs are relatively low. Specifically, the second bearing collar 35 may be a rubber ring.

As shown in FIG. 3 and FIG. 4, in another embodiment of the present invention, the torsional spring 40 includes a first torsional spring 43 and a second torsional spring 44.

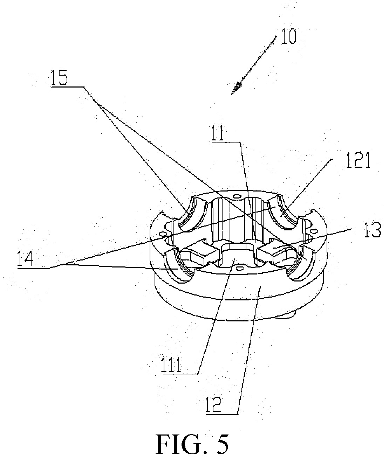

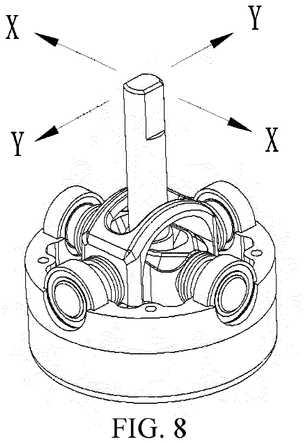

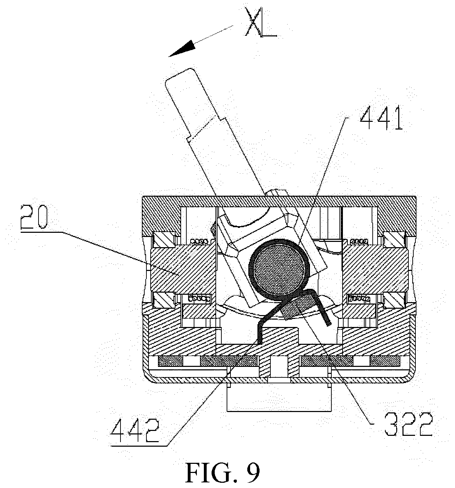

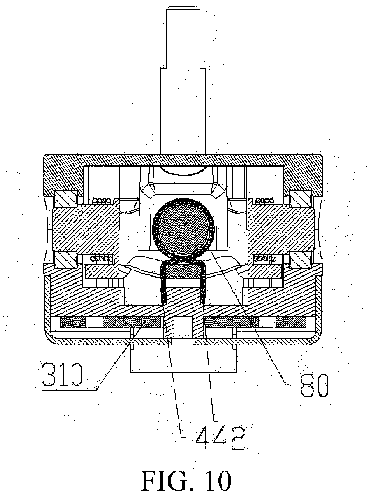

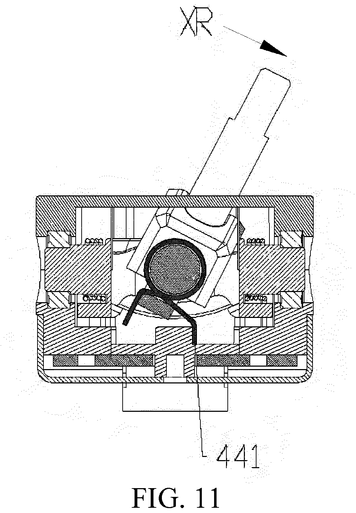

As shown in FIG. 3, FIG. 4, and FIG. 9 to FIG. 11, FIG. 9 to FIG. 11 are all section views of the rocker device in FIG. 8 along X-X. FIG. 9 is a section view showing that the handle moves to a left side (Left, L) of the X axis, that is, moves along an XL direction. FIG. 10 is a section view showing that the handle is in an initial state or after restoring to the neutral position. FIG. 11 is a section view showing that the handle moves to a right side (right, R) of the X axis, that is, moves along an XR direction. The first torsional spring 43 has a first spring pipe 431 and two first legs 432 extending from the first spring pipe 431. The first spring pipe 431 is sleeved on the first rotating shaft 23. Upper parts of the two first legs 432 abut against the first latching portion 222 and lower parts of the two first legs 432 abut against the limiting block 13 shown in FIG. 5. There may be two first torsional springs 43 and the two first torsional springs 43 are respectively sleeved on two first bearings 24 on the two sides. The first torsional spring 43 is installed on the first rotating shaft 23. The upper parts of the two first legs 432 abut against the first latching portion 222 on the first support 22 under the action of torsion. Meanwhile, lower parts of the first torsional spring 43 abut, under the action of torsion, against the limiting block 13 disposed on the base 10, to prevent the first torsional spring 43 from swaying left or right, so that the second rotating shaft 33 is balanced and reset at a center position. A quantity of first torsional springs 43 may be set to two and the two first torsional springs 43 are respectively sleeved on the two first bearings 24 on the two sides, so that the handle 50 can rotate toward any angle, and reset force obtained after the handle 50 is released can be stronger, enabling the handle 50 to be operated more smoothly and sensitively on the whole.

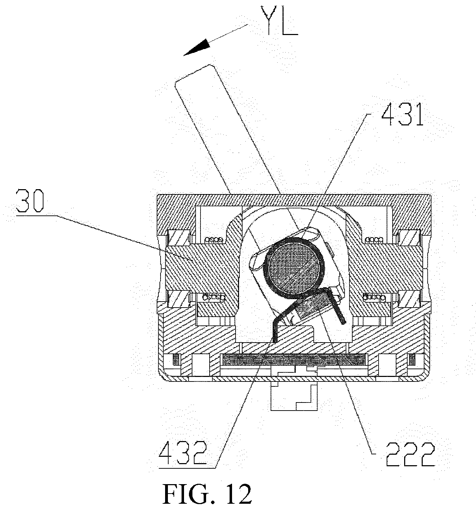

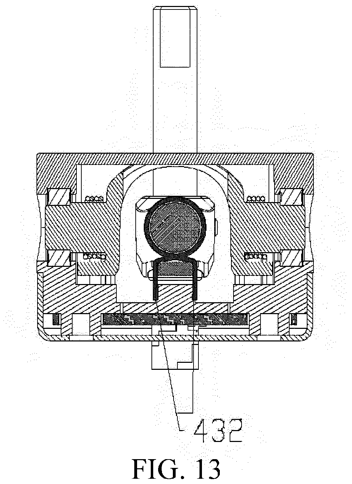

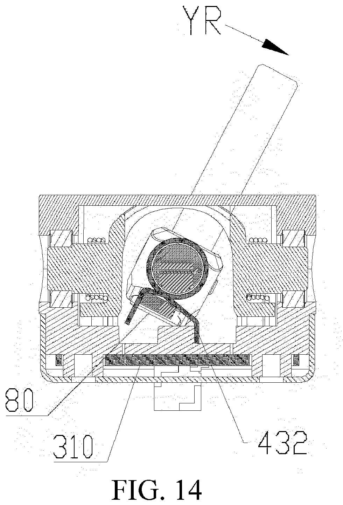

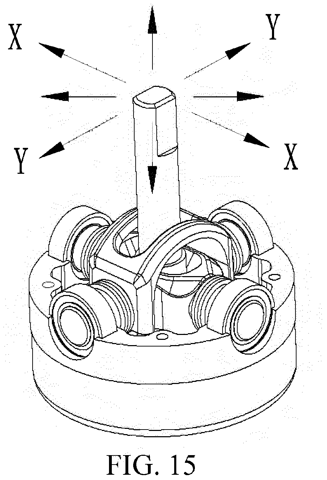

As shown in FIG. 3, FIG. 4, and FIG. 12 to FIG. 14, FIG. 12 to FIG. 14 are all section views of the rocker device in FIG. 8 along Y-Y. FIG. 12 is a section view showing that the handle moves to a left side (left, L) of the Y axis, that is, moves along a YL direction. FIG. 13 is a section view showing that the handle is in an initial state or after restoring to the neutral position. FIG. 14 is a section view showing that the handle moves to a right side (right, R) of the Y axis, that is, moves along a YR direction. The second torsional spring 44 has a second spring pipe 441 and two second legs 442 extending from the second spring pipe 441. The second spring pipe 441 is sleeved on the second rotating shaft 33. Upper parts of the two second legs 442 abut against the second latching portion 322 and lower parts of the two second legs 442 abut against the limiting block 13 shown in FIG. 5. There may be two second torsional springs 44 and the two second torsional springs 44 are respectively sleeved on two second bearings 34 on the two sides. The second torsional spring 44 is installed on the second rotating shaft 33. The upper parts of the two second legs 442 abut against the second latching portion 322 on the second support 32 under the action of torsion. Meanwhile, lower parts of the second torsional spring 44 abut, under the action of torsion, against the limiting block 13 disposed on the base 10, to prevent the second torsional spring 44 from swaying left or right, so that the second rotating shaft 33 is balanced and reset at a center position. A quantity of second torsional springs 44 may be set to two and the two second torsional springs 44 are respectively sleeved on the two second bearings 34 on the two sides, so that the handle 50 can rotate toward any angle, and reset force obtained after the handle 50 is released can be stronger, enabling the handle 50 to be operated more smoothly and sensitively on the whole. As shown in FIG. 8 and FIG. 15, FIG. 8 is a schematic diagram showing that the handle of the rocker device is set to move along a moving direction on the X axis or the Y axis. FIG. 15 is a schematic diagram showing that the handle is set to move along a moving direction on the X axis, the Y axis or another direction. The line on which the first rotating shaft 23 sleeved with the first torsional spring 43 is located is the X axis, and the line on which the second rotating shaft 33 sleeved with the second torsional spring 44 is located is the Y axis. A center line of the second torsional spring 44 and a center line of the first torsional spring 43 are perpendicular to each other.

As shown in FIG. 5, in an embodiment of the present invention, the center of the bottom board 11 is provided with a first through hole 111. The bottom of the handle 50 passes through the first through hole 111. Four limiting blocks 13 are evenly disposed on a periphery of the first through hole 111. Alternatively, four limiting blocks 13 may be evenly disposed on an inner side of the side wall 12 on the bottom board 11. The four limiting blocks 13 are respectively abutted against by the legs 432 of the two first torsional springs 43 and the legs 442 of the two second torsional springs 44.

As shown in FIG. 7, in another embodiment of the present invention, the handle 50 is provided with a third through hole 51. The first support 22 is provided with a limiting hole 221. The rocker device further 100 includes a fixing pin 60, which passes through the third through hole 51 and the limiting hole 221 and fixes the handle 50 and the first rotating device 20. Certainly, the fixing pin 60 may be replaced by a stud, which passes through the third through hole 51 and the limiting hole 221 and then is fastened by a nut. Alternatively, another mechanical structure that can fix the handle 50 and the first rotating device 20 may be used. This is not limited in the present invention.

As shown in FIG. 7, in another embodiment of the present invention, the rocker device 100 further includes an upper cover 70 fixed to the base 10. The upper cover 70 includes a cover board 71 and a cover side wall 72 extending downward from the cover board 71. The cover board 71 is provided with a second through hole 711. An upper part of the handle 50 extends out of the second through hole 711. A first clamping portion 121 is disposed on the side wall 12 and a second clamping portion 721 is disposed on the cover side wall 72. The positioning holes are formed by means of cooperation between the second clamping portion 721 and the first clamping portion 121. That the second clamping portion 721 and the first clamping portion 121 cooperate to form the positioning holes makes it convenient to install the first rotating device 20 and the second rotating device 30. Firstly, the first rotating device 20 and the second rotating device 30 are installed. Then the upper cover 70 is installed. Therefore, a process is easier.

As shown in FIG. 7 and FIG. 9 to FIG. 14, in an embodiment of the present invention, the rocker device 100 further includes a magnet 80, which is fixed to the bottom of the handle 50. The magnet 80 makes it convenient for a magnetic induction unit 310 of a remote control to sense the rocker device 100 after the rocker device 100 is installed to the remote control.

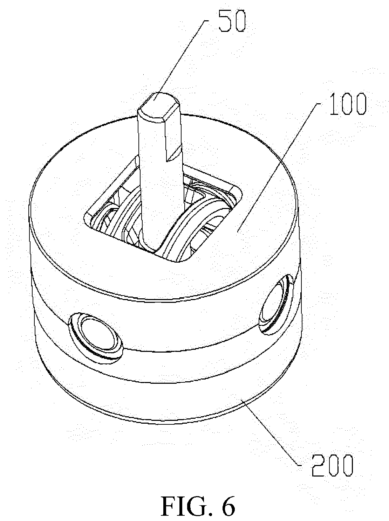

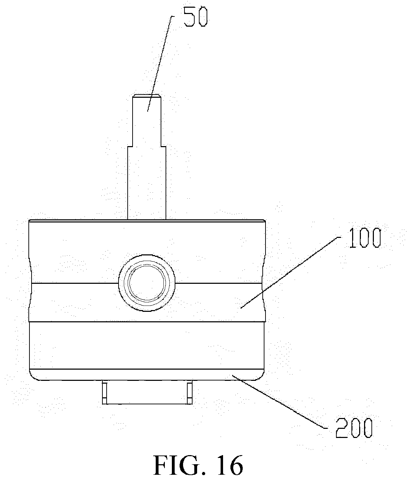

As shown in FIG. 6, FIG. 7 and FIG. 16, an embodiment of the present invention further provides a remote control, including the rocker device 100 described above. In the rocker device of the remote control provided in this embodiment of the present invention, the torsional spring is sleeved on each of the first rotating device and the second rotating device. It is set that a line on which the first rotating device is located is an X axis, and a line on which the second rotating device is located is a Y axis. When the handle is operated along a left-right direction of the X axis, the handle drives the second rotating device to move, and the two legs of the torsional spring on the second rotating device are limited by the limiting block on the base to generate reverse torsion. When the handle is released, the second rotating device resets under the action of the reverse torsion of the torsional spring, to bring the handle to the neutral position. Likewise, when the handle is operated along a left-right direction of the Y axis, the handle drives the first rotating device to move, and the two legs of the torsional spring on the first rotating device are limited by the limiting block on the base to generate reverse torsion. When the handle is released, the first rotating device resets under the action of the reverse torsion of the torsional spring, to bring the handle to the neutral position. When the handle is operated along a direction other than a direction along the X axis and the Y axis, the handle drives the first rotating device and the second rotating device to move at the same time. The second rotating device and the first rotating device respectively reset, to bring the handle to the neutral position at the same time.

As shown in FIG. 7, in another embodiment of the present invention, the remote control further includes a lower cover 200, a circuit board 300 and a magnetic induction unit 310 for sensing the magnet 80. The base 10 of the rocker device 100 is fixed to the lower cover 200. The fixing manner may be engaging, welding, screwing, gluing, or the like. The magnetic induction unit 310 is fixed on the circuit board 300. The circuit board 300 is fixed to the lower cover 200 and close to the bottom of the base 10, making it convenient for the magnetic induction unit 310 to sense a location change of the magnet 80. The circuit board 300 provides a circuit needed by the magnetic induction unit 310. The magnetic induction unit 310 may obtain a rotation angle of the handle 50 relative to the base 10 by sensing rotation of the magnet 80. The magnetic induction unit 310 is used to sense moving status information of the handle 50 and correspondingly output a sensing signal. Specifically, in the embodiment shown in the figure, the handle 50 is rotatable relative to the base 10. The moving status information includes rotation status information of the handle 50. For example, the rotation status information includes at least one of the following: a rotational displacement of the handle 50 or a rotational acceleration of the handle 50. Certainly, in the present invention, the handle 50 may remain at any location after rotation. That is, the handle 50 is released after the rotation of the handle 50, and the handle 50 may remain at a current rotation location. Further, the remote control may further include a controller (not shown in the figure). The controller is disposed in the lower cover 200, and is in communication connection with the magnetic induction unit 310. The controller is used to receive the sensing signal of the magnetic induction unit 310 and correspondingly output a control signal.

In an embodiment of another rocker device of the present invention, the rocker device includes a base and a rotating device. The base is provided with two pivot shafts. The two pivot shafts are located on two sides of the base and one of the pivot shafts is sleeved with a first torsional spring. The first torsional spring includes a spring pipe and two legs extending from the spring pipe. The spring pipe is sleeved on a shaft of the pivot shaft, and the two legs elastically abut against a first group of limiting blocks to supply resilience for a rotary motion of the base relative to a remote control. The rotating device is accommodated in the base. The rotating device is provided with a handle, which passes through the base and extends outwards. A user may operate the handle to enable the rotating device to rotate in the base.

The rotating device includes a handle rotating shaft. The handle rotating shaft is embedded into a positioning hole on the base and rotatably connected to the base. A second group of limiting blocks are disposed on the base. The handle rotating shaft is sleeved with a second torsional spring. The second torsional spring includes a spring pipe and two legs extending from the spring pipe. The spring pipe is sleeved on the handle rotating shaft. The two legs elastically abut against the second group of limiting blocks to supply resilience for a rotary motion of the handle. The rocker device further includes a limiting piece, which is detachably connected to the bottom. The limiting piece defines a rotation angle of the rotating device when the rotating device rotates.

A remote control provided in an embodiment of the present invention may further include the rocker device described in the foregoing embodiments.

The foregoing descriptions are merely exemplary embodiments of the present invention, but are not intended to limit the present invention. Any modification, equivalent replacement, and improvement made without departing from the spirit and principle of the present invention shall fall within the protection scope of the present invention.

## Claims

1. A rocker device, comprising:
a base, which comprises a bottom board, a side wall extending upward from the bottom board, a limiting block being disposed on the base and the side wall being provided with a first group of positioning holes and a second group of positioning holes;
a first rotating device, two ends of the first rotating device being embedded into the first group of positioning holes, the first rotating device being rotatably connected to the base and the first rotating device being provided with a first opening;
a second rotating device, two ends of the second rotating device being embedded into the second group of positioning holes, the second rotating device being rotatably connected to the base, the second rotating device being provided with a second opening and the second opening overlapping with the first opening;
torsional springs, which each comprise a spring pipe and two legs extending from the spring pipe, the two legs clasping the limiting block, there being at least two torsional springs and the two spring pipes being respectively sleeved on the first rotating device and the second rotating device; and
a handle, which is fixed to the first rotating device and disposed in the first opening, the handle passing through the first opening and the second opening.

2. The rocker device according to claim 1, wherein the first rotating device comprises:
a first support, which is hollow, the first opening being provided on the first support and being an elliptic opening, a first latching portion being disposed at the bottom of the first support on an inner side, and the first latching portion being located above the limiting block;
two first rotating shafts respectively fixed to two sides of the first support, the first rotating shaft being disposed above the first latching portion; and
a first bearing sleeved on the first rotating shaft, the first bearing being embedded into the positioning hole; or
a first bearing collar sleeved on the first rotating shaft, the first bearing collar being embedded into the positioning hole.

3. The rocker device according to claim 2, wherein the second rotating device comprises:
a second support, which is sleeved above the first support and is inverted-U-shaped, the second opening being provided on the top of the second support and being an arcuate opening, two second latching portions being disposed at the bottom of the second support on two sides, and the second latching portion being located above the limiting block;
two second rotating shafts respectively fixed to the two sides of the second support, the second rotating shaft being disposed above the second latching portion and a line on which the second rotating shaft is located being perpendicular to a line on which the first rotating shaft is located; and
a second bearing sleeved on the second rotating shaft, the second bearing being embedded into the positioning hole; or
a second bearing collar sleeved on the second rotating shaft, the second bearing collar being embedded into the positioning hole.

4. The rocker device according to claim 3, wherein the torsional springs comprise:
a first torsional spring, which has a first spring pipe and two first legs extending from the first spring pipe, the first spring pipe being sleeved on the first rotating shaft, upper parts of the two first legs clasping the first latching portion, lower parts of the two first legs clasping the limiting block, there being at least two first torsional springs and the two first torsional springs being respectively sleeved on two first bearings on the two sides; and
a second torsional spring, which has a second spring pipe and two second legs extending from the second spring pipe, the second spring pipe being sleeved on the second rotating shaft, upper parts of the two second legs clasping the second latching portion, lower parts of the two second legs clasping the limiting block, there being at least two second torsional springs and the two second torsional springs being respectively sleeved on two second bearings on the two sides.

5. The rocker device according to claim 1, wherein the bottom board is provided with a first through hole and the bottom of the handle passes through the first through hole.

6. The rocker device according to claim 5, wherein four limiting blocks are evenly disposed on a periphery of the first through hole or four limiting blocks are evenly disposed on an inner side of the side wall.

7. The rocker device according to claim 1, wherein the handle is provided with a third through hole, the first support is provided with a limiting hole and the rocker device further comprises:
a fixing pin, which passes through the third through hole and the limiting hole and fixes the handle and the first rotating device.

8. The rocker device according to any of claims 1 to 7, wherein the rocker device further comprises an upper cover fixed to the base, the upper cover comprising a cover board and a cover side wall extending downward from the cover board, the cover board being provided with a second through hole and the handle extending out of the second through hole; and a first clamping portion is disposed on the side wall and a second clamping portion is disposed on the cover side wall, the first group of positioning holes and the second group of positioning holes being all formed by means of cooperation between the second clamping portion and the first clamping portion.

9. The rocker device according to any of claims 1 to 7, wherein the rocker device further comprises:
a magnet, which is fixed to the bottom of the handle.

10. A remote control, comprising the rocker device according to any of claims 1 to 9.

11. The remote control according to claim 10, further comprising:
a lower cover, the base being fixed to the lower cover;
a circuit board, which is fixed to the lower cover and close to the bottom of the base; and
a magnetic induction unit for sensing the magnet, the magnetic induction unit being fixed to the circuit board.

12. A rocker device, used in a remote control and comprising: a base, which is provided with two pivot shafts, the two pivot shafts being located on two sides of the base, one of the pivot shafts being sleeved with a first torsional spring, the first torsional spring comprising a spring pipe and two legs extending from the spring pipe, the spring pipe being sleeved on a shaft of the pivot shaft, and the two legs elastically abutting against a first group of limiting blocks to supply resilience for a rotary motion of the base relative to the remote control; and
a rotating device, the rotating device being accommodated in the base and provided with a handle and the handle passing through the base and extending outwards.

13. The rocker device according to claim 12, wherein the rotating device comprises a handle rotating shaft and the handle rotating shaft is embedded into a positioning hole on the base and rotatably connected to the base.

14. The rocker device according to claim 13, wherein a second group of limiting blocks are disposed on the base, and the handle rotating shaft is sleeved with a second torsional spring, the second torsional spring comprising a spring pipe and two legs extending from the spring pipe, the spring pipe being sleeved on the handle rotating shaft, and the two legs elastically abutting against the second group of limiting blocks to supply resilience for a rotary motion of the handle.

15. The rocker device according to any of claims 12 to 14, further comprising a limiting piece, which is detachably connected to the bottom, the limiting piece defining a rotation angle of the rotating device when the rotating device rotates.

16. A remote control, comprising the rocker device according to any of claims 12 to 15.
